# EUROPÄISCHE PATENTSCHRIFT

(11) **EP 1 466 140 B1**
(45) Veröffentlichungstag und Bekanntmachung des Hinweises auf die Patenterteilung: **07.09.2005**
(21) Anmeldenummer: 02779556.6
(22) Anmeldetag: 14.11.2002
(51) Int. Cl.: G01C 21/34, G08G 1/0965, G08G 1/0968

(54) **VERFAHREN ZUM BESTIMMEN EINER REISEZEIT**
METHOD FOR DETERMINING A TRAVEL TIME
PROCEDE DE DETERMINATION D'UN TEMPS DE TRAJET

(30) Priorität: 15.01.2002 DE 10201106
(43) Veröffentlichungstag der Anmeldung: 13.10.2004
(73) Patentinhaber: DaimlerChrysler AG, 70567 Stuttgart (DE)
(72) Erfinder: HILLER, Andreas, 70378 Stuttgart (DE); KONHAEUSER, Peter, 70176 Stuttgart (DE)
(74) Vertreter: Närger, Ulrike
(86) Internationale Anmeldenummer: PCT/EP2002/012744
(87) Internationale Veröffentlichungsnummer: WO 2003/060429

(56) Entgegenhaltungen:
- DE-A- 4 034 681
- DE-A- 19 903 909
- US-A- 5 933 100
- US-A1- 2001 029 425

## Beschreibung

Die Erfindung betrifft ein Verfahren zum Bestimmen einer Reisezeit für eine beabsichtigte Reisestrecke, oder einen Reisestreckenabschnitt eines Fahrzeugs, bevorzugt eines Kraftfahrzeugs, wobei die Reisezeit dezentral bestimmt wird. Unter Reisezeit wird hierbei eine zu erwartende Dauer für das Zurücklegen einer bestimmten Reisestrecke verstanden. Eine tatsächlich von einem Fahrzeug benötigte Zeit wird als Fahrzeit bezeichnet.

Bei der aktuellen Reisezeit für eine Reisestrecke handelt es sich um eine für den Fahrer eines Fahrzeuges sehr relevante Information über die vor ihm liegende Strecke. Diese Reisezeit ist auch eine grundlegende Information zum Festlegen eines optimalen Reiseroutenplanes, wie diese durch Zielführungssysteme durchgeführt wird. Andere Informationen über die Reisestrecke, wie z.B. Staumeldungen, dienen lediglich dazu die Reisezeit abzuschätzen.

Die nachfolgenden Verfahren werden zur Reisezeitberechnung derzeit eingesetzt:
- Informationen aus digitalen Karten mit straßentypspezifischen Durchschnittsgeschwindigkeiten
- Ganglinienprognosen mit empirischen Fahrzeitverläufen auf Strecken abhängig von der Tageszeit und dem Wochentag
- Auswertung von Staumeldungen, z.B. aus einem Verkehrsinformationskanal(Traffic Message Channel TMC)
- Auswerten von Geschwindigkeitsmessungen an Schleifen oder aus Daten des fließenden Verkehrs (Floating Car Data (FCD))
- Übermitteln von Fahrzeiten aus FCD an eine Zentrale
- Rekonstruktion der Verkehrslage aus Messdaten und sofortiges Auswerten der Daten in einer Simulation (Online-Simulation)

Die US 5,933,100 offenbart ein Verfahren zur Prognose einer bevorstehenden Reisezeit für ein Fahrzeug bis zu einem beabsichtigten Fahrziel. Bei diesem Verfahren übermitteln Fahrzeuge, welche sich im Bereich einer Straßenkartendatenbasis bewegen, ihre jeweils für bestimmte Straßensegmente benötigten Fahrzeiten an eine Zentrale. Dadurch wird die Straßenkartendatenbasis mit aktuell zu erwarteten Reisezeiten ergänzt. Ein Fahrzeugführer, welcher die zu erwartende Reisezeit für das Erreichen eines gewünschten Reiseziels benötigt, kann auf der Basis dieser zusätzlichen Karteninformationen eine Reisezeitprognose von der Zentrale übermittelt bekommen oder die Prognose aus den von der Zentrale zur Verfügung gestellten Daten selbst ermitteln. Nachteilig bei dem Verfahren ist, dass die Reisezeitprognose durch eine Zentrale ermittelt wird oder zumindest die zum Ermitteln der Reisezeit notwendigen Daten von der Zentrale zur Verfügung gestellt werden müssen.

Die US 6,150,961 offenbart ein Verfahren, bei welchem Fahrzeuge Informationen über deren Position und Geschwindigkeit an benachbarte Fahrzeuge senden. Weiterhin werden Warnungen vor Verzögerungen auf der weiteren Fahrstrecke, um bevorstehende Probleme auf der weiteren Reisestrecke abschätzen zu können, übermittelt. Die Schrift offenbart jedoch kein Verfahren zur zuverlässigen Prognose einer bevorstehenden Reisezeit für ein Fahrzeug bis zu einem beabsichtigten Fahrziel.

Nachteilig bei den Verkehrsinformationssystemen gemäß Stand der Technik sind die folgende Einschränkungen:
- Beim bestimmen einer Reisezeit ist immer eine Zentrale beteiligt, welche die Daten sammelt, auswertet und die dadurch ermittelten Informationen dann weiter an die Fahrzeuge übermittelt. Hierdurch wird ein Betreiber für die Zentrale benötigt und es entstehen Kosten für den Betrieb der Zentrale.
- Auch für die aktuelle Fahrstrecke nicht relevante Daten werden an die Fahrzeuge übertragen.
- Die Aktualität der Daten ist bei Empfang in einem Fahrzeug nicht gewährleistet. Z.B. entstehen Verzögerungen durch Verarbeiten der Eingangsinformationen in der Zentrale.
- Die Reisezeit wird an Hand von Indizien wie Straßenklassen oder Staumeldungen geschätzt, aber nicht direkt gemessen, und ist daher ungenau.

Die DE 40 34 681 A1 sowie die DE 199 03 909 A1 offenbaren jeweils ein Verfahren zum Erfassen von Reiseverlaufsdaten für ein in einer Abfolge von Fahrzeugen reisendes Nachfolgefahrzeug durch mindestens ein in der Abfolge vorausreisendes Fahrzeug, wobei Reiseverlaufsinformationen umfassend Reiseverlaufsdaten mittels Fahrzeug-Fahrzeug-Kommunikation von mindestens einem versendenden vorausreisenden Fahrzeug an mindestens ein empfangendes Nachfolgefahrzeug übertragen werden.

Der Erfindung liegt die Aufgabe zugrunde ein Verfahren zum Bestimmen einer Reisezeit zur Verfügung zu stellen, welches die Nachteile des Standes der Technik vermeidet und insbesondere die aktuelle Verkehrssituation auf einer beabsichtigten Fahrtroute ohne Einschalten einer Verkehrszentrale berücksichtigt.

Erfindungsgemäß wird die Aufgabe durch das Verfahren gemäß dem unabhängigen Anspruch gelöst. Besondere Ausführungsformen sind Gegenstand der abhängigen Ansprüche.

Dem erfindungsgemäße Verfahren liegt die Idee zugrunde, dass im Falle einer Abfolge von auf einer Reisestrecke in gleiche Richtung fahrenden Fahrzeugen, die einem eine Reisezeitinformation benötigenden Fahrzeugführer vorausfahrenden Fahrzeuge die jeweils aktuellsten Fahrzeiten auf der Reisestrecke ermitteln können. Daraus kann die jeweils aktuellste Reisezeit ermittelt werden. Die Reisezeitinformation umfassen im allgemeinen den eigenen gespeicherten Fahrtverlauf des jeweiligen Fahrzeuges, also den zurückgelegten Weg über der Zeit, also einen Zusammenhang zwischen Fahrzeit und Positionen auf der Reisestrecke. Diese Informationen werden nachfolgend als Reiseverlaufsdaten bezeichnet. Diese Reiseverlaufsdaten können mittels Fahrzeug-Fahrzeug-Kommunikation an in der Abfolge nachfolgende Fahrzeuge übermittelt werden, wodurch die auf der Reisestrecke jeweils aktuellste zu erwartende Reisezeit für den die Reisezeitinformation benötigenden Fahrzeugführer bereit gestellt werden kann.

Nachfolgend wird stellvertretend für den jeweiligen Fahrer, welcher eine Reisezeitinformation benötigt von dem die Reisezeitinformation empfangenden Fahrzeug gesprochen. Weiterhin wird jeweils von zu übermittelnden Fahrzeiten gesprochen. Hierbei können selbstverständlich auch Daten, welche geeignet sind diese Fahrzeit zu bestimmen, übermittelt werden. Z.B. kann stellvertretend für die Fahrzeit zwischen Streckenpositionen eine Fahrgeschwindigkeit übermittelt werden, wobei unter der Voraussetzung, dass diese Geschwindigkeit zwischen den Streckenpositionen z.B. konstant ist eine entsprechende Fahrzeit ermittelt werden kann.

Bei der Fahrzeug-Fahrzeug-Kommunikation handelt es sich um ein Kommunikationskonzept, bei welchem Fahrzeuge dezentral mit anderen Fahrzeugen in ihrer Umgebung Daten austauschen. Die Kommunikation erfolgt bevorzugt mit Übertragungstechnologien kurzer Reichweite oder mittels gezielter Adressierung von Fahrzeugen in der Umgebung mit Technologien größerer Reichweite, z.B. mittels Mobiltelefonnetzen (Global System for Mobility Communication (GSM)). Das Versenden der Informationen mittels Mobiltelefontechnologie erfolgt zwar über eine Telefonzentrale, dies entspricht jedoch dem erfindungsgemäßen Konzept der direkten Kommunikation zwischen den Fahrzeugen, da die Reiseverlaufsdaten dabei nicht inhaltlich weiter verarbeitet werden, wie dies beim Übertragen über eine Verkehrszentrale der Fall wäre. Auch bei kurzer Reichweite der Übertragungstechnologie können Informationen über größere Entfernungen als die jeweilige Reichweite übermittelt werden, wenn die Informationen zwischen mehreren Fahrzeugen in einer Informationsübertragungskette weitergereicht werden. Durch den Aufbau längerer Kommunikationsketten wird die erfindungsgemäße Ermittlung einer Reisezeit entlang einer Reisestrecke möglich. Zur Durchführung des erfindungsgemäßen Verfahrens müssen nicht zwingend alle Fahrzeuge auf der betreffenden Reisestrecke, für welche eine Reisezeit ermittelt wird, mit einer Technologie zur Fahrzeug-Fahrzeug-Kommunikation ausgerüstet sein. Es können auch Fahrzeuge, ohne eine derartige Technologie, welche sich nicht am erfindungsgemäßen Verfahren beteiligen, zwischen den Kommunizierenden Fahrzeugen reisen. Weiterhin können Fahrzeuge, welche nicht ihre eigenen Reiseverlaufsdaten erfassen, als Zwischenübermittler an der Kommunikationskette teilnehmen.

Erfindungsgemäß wird zum Bestimmen einer Reisezeit für eine Reisestrecke für ein in einer Abfolge von Fahrzeugen reisendes nachfolgendes Fahrzeug (Nachfolgefahrzeug) ein Erfassen von Reiseverlaufsdaten durch mindestens ein in der Abfolge vorausreisendes Fahrzeug vorgenommen. Die Reiseverlaufsdaten umfassen mindestens eine Fahrzeit oder Daten, aus denen diese ermittelbar ist, für eine Teilstrecke zwischen zwei Positionen auf der Reisestrecke. Bei den Positionen handelt es sich um Streckenpositionen, also Positionen eines Fahrzeuges auf der Reisestrecke. Z.B. kann es sich hierbei um die momentanen Streckenkilometerangaben von Positionen auf der Reisestrecke an welchen sich das Fahrzeug zu bestimmten Zeiten befindet handeln. Die Reisezeit wird mindestens für eine die Teilstrecke umfassende Strecke aus den Reiseverlaufsdaten ermittelt. Das Ermitteln der Reisezeit erfolgt also für mindestens einen Abschnitt aus der Reisestrecke, welche das Reiseinformationen benötigende Nachfolgefahrzeug vor sich hat. Das Ermitteln der Reisezeit kann dabei entweder im Reiseverlaufsdaten ermittelnden Fahrzeug aus den ermittelten und gespeicherten Reiseverlaufsdaten oder in einem die Reiseverlaufsdaten empfangenden Fahrzeug aus den empfangenen Reiseverlaufsdaten erfolgen. Im erstgenannten Fall ist die Kenntnis der momentanen Position des Nachfolgefahrzeuges, für welche die Reisezeit ermittelt wird, im Reiseverlaufsdaten erfassenden Fahrzeug notwendig. Die Reisezeitbestimmung erfolgt dabei durch ein Reisezeitbestimmungsmodul, welches bevorzugt als Bordcomputer ausgeführt ist. Für das Zwischenspeichern von Reiseverlaufsdaten ist weiterhin ein Speichermodul im Fahrzeug vorgesehen, welches bevorzugt als Bestandteil des Bordcomputers ausgeführt ist.

Es werden Reiseverlaufsinformationen, welche die Reiseverlaufsdaten und/oder die Reisezeit umfassen, mittels Fahrzeug-Fahrzeug-Kommunikation von mindestens einem versendenden vorausreisenden Fahrzeug an mindestens ein empfangendes Nachfolgefahrzeug übertragen.

Bei den die Teilstrecke festlegenden Positionen auf der Reisestrecke handelt es sich bevorzugt um die aktuelle Fahrzeugposition des Nachfolgefahrzeugs und eine Position auf der bevorstehenden Reisestrecke des Nachfolgefahrzeugs. Vorzugsweise wird der Reiseverlauf mindestens auf einer Strecke, welche in der Größenordnung der Reichweite der Fahrzeug-Fahrzeug-Kommunikationseinrichtung ist, erfasst. Bevorzugt haben die Positionen, an welchen die Fahrzeiten erfasst werden feste Distanzen. Dies ermöglicht die Reduktion der mittels Fahrzeug-Fahrzeug-Kommunikation zu übermittelnden Daten und eine vereinfachte Reisezeitberechnung. Befindet sich ein Fahrzeug, welches eine erfindungsgemäß zu bestimmende Reisezeit benötigt, zwischen zwei Streckenpositionen, an welchen die Fahrzeiten erfasst wurden, so wird der zeitliche Reiseverlauf zur Berechnung der Reisezeit bevorzugt linear angenähert. Dies bedeutet, dass von einer konstanten Durchschnittsgeschwindigkeit zwischen den Streckenpositionen des die entsprechenden Fahrzeiten erfassenden Fahrzeuges ausgegangen wird.

Bevorzugt erfolgt das Übertragen der Reiseverlaufsdaten durch Übertragen von Parametern von die Reiseverlaufsdaten darstellenden Funktionen. Dabei werden bestimmte Funktionsparameter mittels bekannter Verfahren durch Anpassen an den funktionalen Verlauf der Reiseverlaufsdaten ermittelt und anstelle der eigentlichen Reiseverlaufsdaten übermittelt. Bevorzugt handelt es sich dabei um Parameter eines polygonzugartigen Funktionsverlaufs. Diese bevorzugte Ausführungsform führt zu einer zusätzlichen Reduktion der zu übermittelnden Datenmenge.

Besonders bevorzugt werden beim erfindungsgemäßen Verfahren von mehreren in der Abfolge reisenden Fahrzeugen Reiseverlaufsinformationen von vorausreisenden Fahrzeugen empfangen und Reiseverlaufsinformationen versendet, wobei die Fahrzeuge derart eine Kommunikationskette bilden, dass zumindest Teile der von den Fahrzeugen jeweils empfangenen Reiseverlaufsinformationen und/oder daraus ermittelte Gesamtfahrzeiten von den empfangenden Fahrzeugen weiter an in der Abfolge nachfolgende Fahrzeuge versendet werden. Als Gesamtfahrzeit wird dabei eine Zeit bezeichnet, welche sich aus der Addition von Fahrzeiten ergibt. Es handelt sich dabei also in der Nomenklatur der vorliegenden Beschreibung um eine Reisezeit, welche aus Fahrzeiten zumindest von einigen der an der Kommunikationskette beteiligten Fahrzeugen ermittelt wurde. Bilden die Fahrzeuge auf der Reisestrecke eine derartige Kommunikationskette aus, bei welcher Fahrzeiten beinhaltende Reiseverlaufsinformationen von vorausfahrenden Fahrzeugen empfangen und an nachfolgende Fahrzeuge versendet werden, so kann durch eine Addition von derart an nachfolgende Fahrzeuge übermittelten Zeiten prinzipiell eine aktuell zu erwartende Reisezeit für eine beliebig lange bevorstehende Reisestrecke berechnet werden. Zur Ausbildung einer derartigen Kommunikationskette genügt es, bei ausreichender Verkehrsdichte die gespeicherten Reiseverlaufsdaten nur ein kurzes Stück, also z.B. einige hundert Meter stromaufwärts zu versenden.

Die zu versendenden Reiseverlaufsinformationen welche, an nachfolgende Fahrzeuge übermittelt werden, sind bevorzugt auf einen bestimmten Radius um die versendenden oder empfangenden Fahrzeuge beschränkt. Hierdurch wird die zu übertragende Datenmenge eingeschränkt. Dieser Radius kann z.B. durch die Angabe einer zeitlichen Erreichbarkeit angegeben werden. Z.B. ist es zweckmäßig Reiseverlaufsdaten, welche sich auf Streckenabschnitte beziehen, die innerhalb von zwei Stunden erreichbar sind, zu versenden.

Die durch die Fahrzeuge versendeten Reiseverlaufsinformationen enthalten bevorzugt mindestens eine Abschnittsgesamtreisezeit für mindestens einen durch jeweils zwei Reiseabschnittsgrenzen bestimmten Reiseabschnitt. Bei diesen Reiseabschnittsgrenzen handelt es sich um die Grenzen von definierten Streckenabschnitten, durch welche ein Straßennetz räumlich aufgeteilt wird. Die Positionen der Abschnittsgrenzen sind innerhalb der verfahrensbeteiligten Fahrzeuge bekannt. Das Erreichen der Abschnittsgrenzen wird durch das fahrzeuginterne Positionsbestimmungssystem erkannt. Vorzugsweise werden Reisezeiten für ganze derartige Abschnitte bestimmt und als Gesamtfahrzeit für den dazugehörigen Abschnitt weitergeleitet. In einer bevorzugten Ausführungsform des erfindungsgemäßen Verfahrens werden zusätzlich zu den Reiseverlaufsinformationen, welche zum Reiseverlauf im aktuellen, d.h. im gerade durchfahrenen Abschnitt gehören, auch Reiseverlaufs-informationen über, im Reiseverlauf noch zu durchfahrende, also weiter vorne liegende Abschnitte an die nachfolgenden Fahrzeuge versendet. Diese Informationen werden erfindungsgemäß von Fahrzeugen, welche dem die Abschnittsgrenze erreichenden Fahrzeug vorausfahren, an das die Abschnittsgrenze erreichende Fahrzeug übermittelt. Die durch die Fahrzeuge versendeten Reiseinformation beinhalten dann mindestens eine Abschnittsgesamtreisezeit für mindestens einen durch jeweils zwei Reiseabschnittsgrenzen bestimmten Reiseabschnitt.

Bevorzugt wird das Versenden der Reiseverlaufsinformationen zeitlich koordiniert. Diese Koordination wird durch das Triggern des Versendens beim Eintreffen bestimmter Ereignisse erreicht. Bevorzugt wird das Versenden von Reiseverlaufsinformationen durch den Empfang von Reiseverlaufsinformationen von vorausfahrenden Fahrzeugen und/oder durch das Erreichen von Reiseabschnittsgrenzen getriggert.

Eine weitere Möglichkeit, das erfindungsgemäße Verfahren zu triggern, besteht darin, dass das Versenden der Reiseverlaufsinformationen durch die Fahrzeuge durch den Empfang einer Reiseinformationsanfrage angestoßen wird. Eine weitere bevorzugte Ausführungsform des erfindungsgemäßen Verfahrens beinhaltet das Versenden einer derartigen Reiseinformationsanfrage durch ein Fahrzeug dessen Fahrer eine Reisezeit bis zu einem Reiseziel oder einem Reiseabschnittsende benötigt. Die Reiseinformationsanfrage wird dabei von einem Fahrzeug an mindestens ein in der Abfolge vorausreisendes Fahrzeug versendet und die in der Abfolge vorausreisenden Fahrzeuge übermitteln die Reiseinformationsanfrage so lange an weitere vorausreisende Fahrzeuge weiter, bis die Reiseinformationsanfrage an ein vorderstes vorausreisendes Fahrzeug, welches ein in der Reiseinformationsanfrage angegebenes Reiseziel oder eine nächste Reiseabschnittsgrenze bereits erreicht hat, übermittelt wurde. Das Rücksenden der Reiseinformationen durch das vorderste Fahrzeug wird dann durch den Empfang der Reiseinformationsanfrage angestoßen. Es wird daher eine bidirektionale Kommunikation durchgeführt. Das heißt, es wird in Reiserichtung, also verkehrsflussabwärts und in Richtung der nachfolgenden Fahrzeuge, also verkehrsflussaufwärts, mittels FFK kommuniziert. Bei diesem erfindungsgemäßen bidirektionalen Reisezeitermittlungsverfahren erfolgt das Berechnen der Reisezeit bis zum in der Reiseinformationsanfrage enthaltenen Reiseziel oder dem darin bezeichneten Reiseabschnittsende bevorzugt dadurch, dass die Gesamtfahrzeit bis zu diesen Orten durch Aufsummieren von Fahrzeiten der an der Kommunikation beteiligten Fahrzeuge durchgeführt wird. Dabei beinhaltet die Reiseinformationsanfrage eine aktuelle Fahrzeugposition des jeweils die Reiseinformationsanfrage versendenden Fahrzeugs. Die an mindestens ein nachfolgendes Fahrzeug übermittelten Reiseverlaufsinformationen umfassen eine Gesamtfahrzeit zwischen der aktuellen Fahrzeugposition und dem Reiseziel oder der Reiseabschnittsgrenze. Die Gesamtfahrzeit wird dabei durch Aufsummieren der vom vordersten vorausreisenden Fahrzeug an die an der Weiterleitung der Reiseinformationsanfrage beteiligten Fahrzeuge zurückgesendeten Fahrzeiten berechnet.

Die Fahrzeuge ermitteln ihre Position mittels eines im Fahrzeug vorgesehenen Positionierungssystems, z.B. einem Satellitenortungssystem, oder Positionsbestimmen mittels eines Mobiltelefons, bevorzugt mittels des Globalen PositionierungsSystems (Global Positioning System (GPS)). Die Genauigkeit des erfindungsgemäßen Verfahrens wird dabei durch die Genauigkeit des Positionsbestimmens der einzelnen an der Durchführung des erfindungsgemäßen Verfahrens beteiligten Fahrzeuge mit bestimmt. Das Positionsbestimmen kann mit Hilfe einer digitalen Karte und Mapmatchingverfahren, also Verfahren, bei denen zu einer gemessene Fahrzeugposition eine entsprechende Position auf der Karte bestimmt wird, verbessert werden. Die Fahrzeiten können z.B. durch eine in jedem Fahrzeug üblicherweise vorhandene Uhr bestimmt werden.

Verzweigt sich das Straßennetz und damit die möglichen bevorstehenden Reiserouten, so müssen die empfangenen Reiseverlaufsinformationen für alle möglichen Routen weiter versendet werden. Bevorzugt werden dabei alle empfangenen und erfassten Reiseverlaufsinformationen, welche innerhalb eines Radius liegende Strecken betreffen, weiter gesendet. Der Radius kann dabei als eine Entfernung angegeben werden, bevorzugt wird der Radius als eine in einer bestimmten Zeit, z.B. zwei Stunden, erreichbare Entfernung angegeben. Mit Ausnahme der bevorzugten Ausführungsform des erfindungsgemäßen Verfahrens, bei welchem ein Fahrzeug eine Reiseinformationsanfrage zum Erlangen einer Reisezeit bis zu einem bestimmten Reiseziel versendet, müssen in der Informationskette immer die gesamten Reiseverlaufsinformationen weitergegeben werden. Nur dadurch können nachfolgende Fahrzeuge aus den empfangenen Reiseverlaufsinformationen eine Reisezeit bis zu einem gewünschten Ziel selbst ermitteln.

Das erfindungsgemäße Verfahren wird bevorzugt auf Reisestrecken mit nicht zu geringer Verkehrsdichte angewandt. Hier kann auch bei Fahrzeug-Fahrzeug-Kommunikation über eine Übertragungstechnologie mit geringer Reichweite eine Kommunikationskette über eine lange Strecke aufgebaut werden. Das erfindungsgemäße Verfahren wird daher bevorzugt auf Autobahnen oder autobahnähnlichen Kraftfahrstraßen angewandt. Das erfindungsgemäße Verfahren kann auch in zentralengestützte Systeme eingebunden werden. Weiterhin können in das Verfahren Systeme mit an den Reisestrecken fest installierten Sende- und Empfangsstationen eingebunden werden. Die Zentrale und/oder die installierten Sende- und Empfangsstationen können dabei zur Überbrückung von Lücken im Verkehrsfluss, welche zum Abreißen der Kommunikationskette, insbesondere bei Übertragungstechnologien mit geringer Reichweite, führen, genutzt werden. Dabei werden die von der Zentrale und/oder von den fest installierten Sende- und Empfangsstationen empfangenen Reiseinformationen entgegen der Reiserichtung der die Informationen versendenden Fahrzeuge weiter übertragen. Bevorzugt wird den am erfindungsgemäßen Verfahren beteiligten Fahrzeugen die Zwischenschaltung einer Zentrale und/oder installierten Sende- und Empfangsstationen, z.B. durch eine Fehlermeldung, angezeigt.

Bevorzugt kann das erfindungsgemäße Verfahren zur Ermittlung einer optimalen Reisestrecke durch Auswahl einer alternativen Reisestrecke, für welche eine geringste Reisezeit bestimmt wurde, eingesetzt werden. Dabei werden die Reisezeiten für mindestens zwei alternative Reisestrecken ermittelt. Die Reisestrecke mit der geringsten erfindungsgemäß ermittelten Reisezeit wird dann als optimale Reisestrecke gewählt. Im Falle des bidirektionalen Reisezeitbestimmungsverfahrens muss dann die Reiseinformationsanfrage Angaben über den Streckenverlauf enthalten, für welchen die Reisezeit bestimmt werden soll.

Durch das erfindungsgemäße Verfahren werden insbesondere folgende Vorteile realisiert:
- Es wird keine Verkehrszentrale zum Bestimmen der Reisezeit benötigt. Das Verfahren funktioniert dezentral.
- Das Bestimmen der Reisezeit basiert auf aktuellen Informationen. Es wird sicher gestellt, dass keine veralterten Informationen in das Bestimmen der Reisezeit eingehen.
- Die Bestimmen der Reisezeit wird, aus gezielten Informationen für die Strecke vor dem Fahrzeug bis zum Reiseziel sehr genau ermittelt.
- Zum Reisezeitbestimmen wird eine Technologie (FFK) verwendet, welche auch für andere Zwecke im Fahrzeug genutzt werden kann. Es wird daher keine über die Fahrzeug-Fahrzeug-Kommunikationseinrichtung hinausgehende spezielle Zusatzausrüstung im Fahrzeug benötigt.
- Fahrzeuge geben bevorzugt nur die Reisezeiten für die vor ihnen liegenden Strecken weiter, daher sind die zu sendenden Datenmengen sehr gering. Diese Reisezeitdaten sind für alle an der Kommunikationskette beteiligten Fahrzeuge relevant.

Die vorliegende Erfindung und bevorzugte Ausführungsformen der Erfindung werden nachfolgend, ohne Beschränkung der Allgemeinheit, unter Bezugnahme auf die Figuren beschrieben.

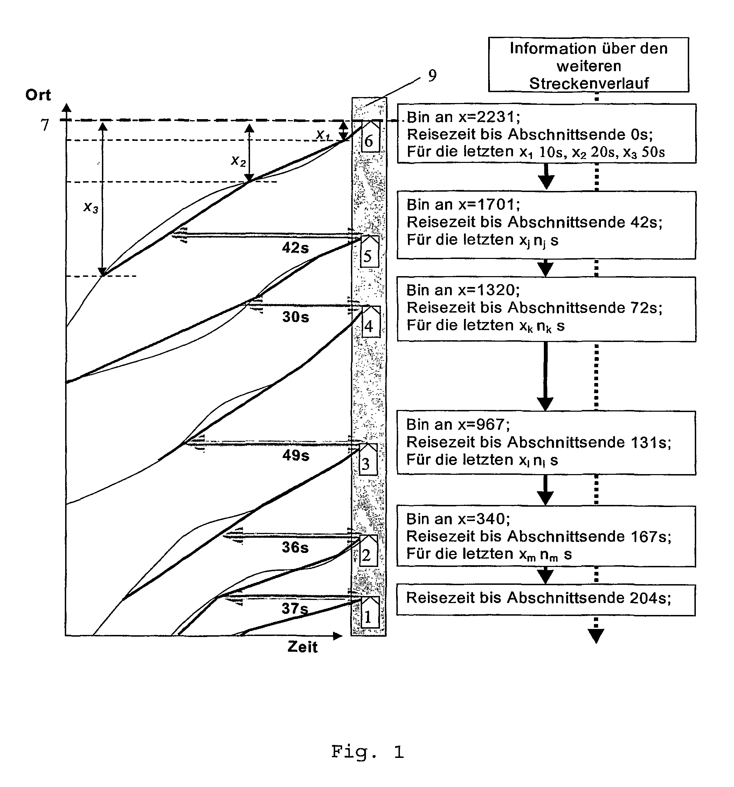

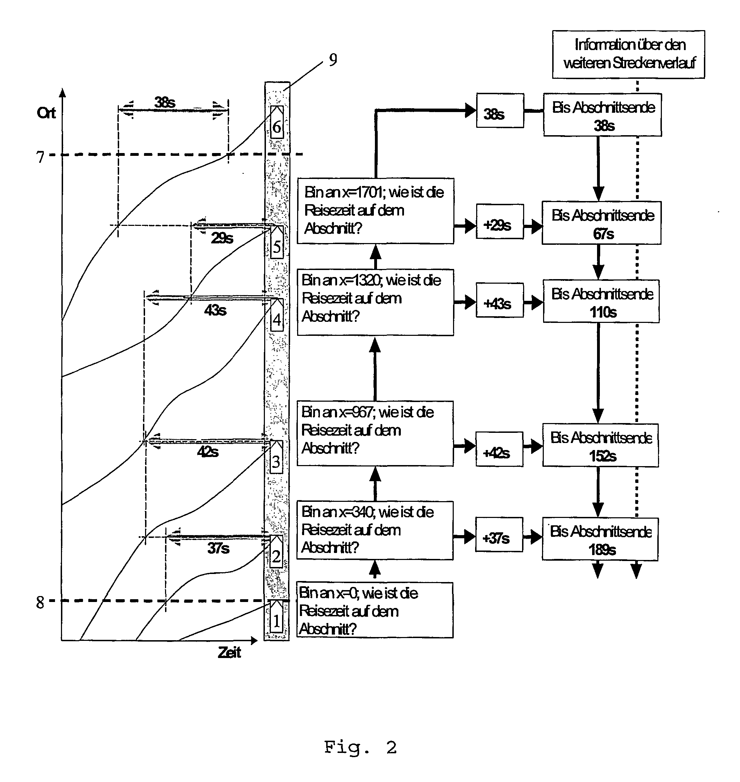

Fig. 1 zeigt die prinzipielle erfindungsgemäße Verfahrensweise zum dezentralen Ermitteln der Reisezeit auf einem Streckenabschnitt mit unidirektionaler Kommunikation. Fig. 2 zeigt die prinzipielle erfindungsgemäße Verfahrensweise zum dezentralen Ermitteln der Reisezeit auf einem Streckenabschnitt mit bidirektionaler Kommunikation.

Fig. 1 zeigt die prinzipielle erfindungsgemäße Verfahrensweise zum dezentralen Ermitteln der Reisezeit auf einem Streckenabschnitt mit unidirektionaler Kommunikation. Diese bevorzugte Ausführungsform des erfindungsgemäßen Verfahrens verzichtet auf Reiseinformationsanfragen und damit auf die Kommunikation zwischen den Fahrzeugen in Richtung der stromabwärts liegenden Strecke. Daher handelt es sich um ein Verfahren mit unidirektionaler Fahrzeug-Fahrzeug-Kommunikation.

Die Figur zeigt eine Abfolge von sechs, an einem erfindungsgemäßen Bestimmen der Reisezeit beteiligten Fahrzeugen 1 bis 6 auf einer Reisestrecke 9. In der Figur befinden sich keine weiteren Fahrzeuge zwischen den am Bestimmen der Reisezeit beteiligten Fahrzeugen. Dies ist im allgemeinen nicht notwendigerweise der Fall. Das Bestimmen der Reisezeit kann auch erfolgen, wenn zwischen den beteiligten Fahrzeugen weitere Fahrzeuge fahren, welche nicht erfindungsgemäß kommunizieren. Links von der Darstellung der Reisestrecke sind die Reiseverläufe der einzelnen Fahrzeuge in einem Weg-Zeit-Diagramm dargestellt. Auf der Reisestrecke befindet sich eine Reiseabschnittsgrenze 7. Rechts von der Reisestrecke ist in der Figur der Ablauf der Kommunikation zwischen den Fahrzeugen dargestellt. Die Reiseverlaufsinformationen über den weiteren Streckenverlauf werden immer von vorausfahrenden Fahrzeugen in Richtung nachfolgende Fahrzeuge übermittelt, d.h. an Fahrzeuge, welche sich im Fahrzeugstrom aufwärts befinden.

Das Versenden der Reiseverlaufsinformationen erfolgt angestoßen durch das Erreichen einer Abschnittsgrenze durch ein Fahrzeug. In der Figur handelt es sich dabei um das oberste dargestellte Fahrzeug 6. Dieses Fahrzeug 6 sendet seine Reiseverlaufsinformationen mindestens an das ihm nachfolgende an der Durchführung des erfindungsgemäßen Verfahrens beteiligte Fahrzeug 5. Beispielsweise handelt es sich bei den Reiseverlaufsinformationen um die Fahrzeiten zwischen den Streckenpositionen x₁, x₂ sowie x₃ und dem soeben erreichten Abschnittsende. Die Daten der Reiseverläufe zwischen diesen Streckenpositionen werden bevorzugt linear interpoliert, so dass sich insgesamt ein polygonzugartiger Verlauf ergibt. Dies ist in der Figur im Weg-Zeit-Diagramm dargestellt. Alternativ zur linearen Interpolation ist auch jede andere Interpolationsfunktion möglich, mit der durch geeignete Funktionsparameterwahl der Verlauf angenähert werden kann. Das die Reiseverlaufsinformationen empfangende Fahrzeug 5 befindet sich an einer Position zwischen x₂ und x₃, so dass die an das nachfolgende Fahrzeug 5 versendeten Reiseverlaufsinformationen erfindungsgemäß eine Reisezeit zwischen dessen aktueller Position x = 1701 und einer Position auf der bevorstehenden Reiseroute, z.B. der Position des Abschnittsendes umfasst. Aus dieser Information ermittelt das empfangende Fahrzeug 5 eine Reisezeit z.B. bis zum nächsten Abschnittsende. Im Beispiel beträgt diese zweiundvierzig Sekunden. Das Fahrzeug 5, welches diese Reiseverlaufsinformationen empfangen hat, versendet, angestoßen durch den Empfang, seine Reiseverlaufsinformationen an das ihm folgende Fahrzeug 4. Zusätzlich versendet es, als Teil der von ihm empfangenen Reiseverlaufsinformationen, die ermittelte Reisezeit zwischen seiner aktuellen Position und dem Abschnittsende an das nachfolgende Fahrzeug 4.

Dadurch, dass die Fahrzeuge nicht lediglich die empfangenen Reiseverlaufsinformationen in einer Kette weitergeben, sondern jedes einzelne Fahrzeug bevorzugt die Daten verarbeitet und die komprimierten Informationen, also die ermittelte Reisezeit oder auch Gesamtfahrzeit zwischen seiner aktuellen Position und dem Abschnittsende, als Teil der von dem Fahrzeug empfangenen Reiseverlaufsinformationen weitergibt, wird der Kommunikationsaufwand zwischen den Fahrzeugen reduziert. Fahrzeug 4 bestimmt nun seinerseits aus den empfangenen Reiseverlaufsinformationen die Reisezeit zwischen seiner Position und dem vorausfahrenden Fahrzeug. Diese beträgt z.B. dreißig Sekunden. Zusammen beträgt daher die Reisezeit zwischen der aktuellen Fahrzeugposition und dem Abschnittsende zweiundsiebzig Sekunden. Auch dieses Fahrzeug 4 und die nachfolgenden Fahrzeuge senden die jeweils ermittelte Reisezeit bis zum Abschnittsende und die eigenen Reiseverlaufsinformationen an nachfolgende Fahrzeuge. Auf diese Weise kann jedes nachfolgende Fahrzeug eine Reisezeit für die Strecke zwischen der eigenen aktuellen Position bis zum nächsten Abschnittsende bestimmen. Die derart erfindungsgemäß bestimmte Reisezeit zwischen dem in der Figur untersten Fahrzeug 1 und dem Abschnittsende 7 beträgt im in der Figur dargestellten Beispiel zweihundert und vier Sekunden. In der Informationskette können auch bekannte Reisezeiten für Abschnitte der weiteren Strecke oder für verschiedene alternative Strecken weitergegeben werden, die z.B. nach dem erfindungsgemäßen Verfahren ermittelt wurden. Dies ist in der Figur durch den punktierten Pfeil rechts in der Figur dargestellt.

In Fig. 2 wird das rekursive Bestimmen der Reisezeit, bei Versenden einer Reiseinformationsanfrage durch ein Fahrzeug, im Falle des Bestimmens einer Reisezeit bis zum nächsten Reiseabschnittsende dargestellt. Bei der Ermittlung der Reisezeit mit bidirektionaler Kommunikation erfolgt die Berechnung der Reisezeit bevorzugt aus den empfangenen, in der Reiseinformationsanfrage enthaltenen Positionsinformationen des die Positionsinformationen versendenden Fahrzeuges und der vom jeweiligen die Anfrage empfangenden Fahrzeug gespeicherten Reiseverlaufsdaten. In dieser bevorzugten Ausführungsform des erfindungsgemäßen Verfahrens berechnet jedes am Verfahren beteiligte Fahrzeug die Reisezeit für das in der Abfolge nachfolgende Fahrzeug, welches die Reiseinformationsanfrage abgesendet hat.

Die Figur zeigt eine Abfolge von sechs, an einem erfindungsgemäßen Bestimmen der Reisezeit beteiligte Fahrzeuge 1 bis 6 auf einer Reisestrecke 9. In der Figur befinden sich keine weiteren Fahrzeuge zwischen am Reisezeitbestimmen beteiligten Fahrzeugen. Dies ist im allgemeinen nicht notwendigerweise der Fall. Das Bestimmen der Reisezeit kann auch erfolgen, wenn zwischen den beteiligten Fahrzeugen weitere Fahrzeuge fahren, welche nicht erfindungsgemäß kommunizieren. Links von der Darstellung der Reisestrecke sind die Reiseverläufe der einzelnen Fahrzeuge in einem Weg-Zeit-Diagramm dargestellt. Auf der Reisestrecke befinden sich zwei Reiseabschnittsgrenzen 7, 8. Rechts von der Reisestrecke ist in der Figur der Ablauf der Kommunikation zwischen den Fahrzeugen dargestellt. Die Reiseverlaufsinformationen werden immer von vorausfahrenden Fahrzeugen in Richtung nachfolgende Fahrzeuge übermittelt, d.h. an Fahrzeuge, welche sich im Fahrzeugstrom aufwärts befinden.

Das in der Figur unterste Fahrzeug 1 sendet eine Reiseinformationsanfrage an das nächste vorausfahrende Fahrzeug 2, um die Reisezeit für die vor ihm liegenden Streckenabschnitte - im dargestellten speziellen Fall, die Reisezeit bis zur nächsten Streckenabschnittsgrenze -, zu erfahren. Aufgrund dessen, dass eine Reiseinformationsanfrage in Fahrtrichtung an vorausfahrende Fahrzeuge, d.h. in Richtung des Fahrzeugstromes, also stromabwärts und die Übermittlung der Reiseverlaufsinformationen stromaufwärts, d.h. zurück erfolgt handelt es sich um eine bidirektionale Kommunikation zwischen den Fahrzeugen. Die Reiseinformationsanfrage beinhaltet die aktuelle Fahrzeugposition x des die Reiseinformationsanfrage versendenden Fahrzeuges. Die Fahrzeugposition ist in der Figur als Abstand von einer gerade erreichten ersten Reiseabschnittsgrenze angegeben. Das unterste Fahrzeug 1 gibt daher in der Figur seine Position x = 0 in seiner Reiseinformationsanfrage weiter. Das vorausfahrende, empfangende Fahrzeug 2 kann bereits aus eigenen, gespeicherten Reiseverlaufsdaten die Reisezeit zwischen der Position des sendenden Fahrzeugs 1 und der eigenen Position x = 340 bestimmen. Diese beträgt im Beispiel der Figur siebenunddreißig Sekunden. Um Reisezeiten für die Strecke weiter stromab zu ermitteln, wird die Reiseinformationsanfrage von den in der Abfolge vorausfahrenden Fahrzeugen so lange an das jeweils weiter vorausfahrende Fahrzeug weitergeleitet bzw. gestellt, bis die Reiseinformationsanfrage von einem letzten Fahrzeug, welches die nächste Reiseabschnittsgrenze bereits erreicht hat, empfangen wurde. In der Figur handelt es sich dabei um das oberste Fahrzeug 6. Dabei wird mit der Reiseinformationsanfrage die jeweilige aktuelle Fahrzeugposition x des die Reiseinformationsanfrage weiterleitenden Fahrzeuges an das vorausfahrende Fahrzeug übergeben. Das letzte Fahrzeug 6 beginnt nun mit der Versendung der Reiseverlaufsdaten an das hinter ihm nachfolgende Fahrzeug 5. Aus den eigenen Reiseverlaufsdaten und der vom nachfolgenden Fahrzeug 5 in der Reiseinformationsanfrage übermittelten Position des nachfolgenden Fahrzeugs x = 1701 ermittelt das letzte Fahrzeug 6 die von ihm zwischen dieser Position und dem Abschnittsende benötigte eigene Fahrzeit. Diese beträgt im Beispiel achtunddreißig Sekunden. Das letzte Fahrzeug 6 übermittelt also die Fahrzeit achtunddreißig Sekunden mittels Fahrzeug-Fahrzeug-Kommunikation an das nachfolgende am Durchführen des erfindungsgemäßen Verfahrens beteiligte Fahrzeug 5. Letzteres kennt aus der Reiseinformationsabfrage des ihm folgenden Fahrzeugs 4 dessen Position (x = 1320). Es ermittelt wiederum aus den eigenen Reiseverlaufsdaten die eigene benötigte Fahrzeit zwischen der eigenen Position und der des folgenden Fahrzeugs 4. Diese Fahrzeit (neunundzwanzig Sekunden) wird zu der vom vorausfahrenden Fahrzeug übermittelten Fahrzeit addiert. Das Ergebnis entspricht der Reisezeit zwischen dem folgenden Fahrzeug 4 und der Abschnittsgrenze. Dieses Ergebnis (siebenundsechzig Sekunden) wird wiederum an das nachfolgende Fahrzeug 3 mittels FFK übermittelt. Dieses Fahrzeitermitteln wird solange fortgesetzt, bis die Reiseverlaufsdaten an das Fahrzeug 1, welches die Reiseverlaufsinformationsanfrage ursprünglich gestartet hat, übermittelt wurden. Dieses Fahrzeug erhält derart eine aktuelle Reisezeit, welche aus den Reiseverlaufsdaten der vorausfahrenden Fahrzeuge ermittelt wurde, übermittelt. Im Beispiel beträgt die erfindungsgemäß ermittelte Reisezeit zwischen der Position des die Reiseverlaufsinformationsanfrage ursprünglich startenden Fahrzeuges 1 und dem Abschnittsende einhundertneunundachtzig Sekunden. Auf die dargestellte Art kann auch eine Reisezeit zu einem beliebigen Reiseziel ermittelt werden. Hierzu wird in den Reiseverlaufsanfragen das gewünschte Reiseziel mit übergeben und die Reisezeitberechnung anstelle des Abschnittsendes bis zu diesem Reiseziel durchgeführt.

Bevorzugt wird mit dem Rücksenden der Reiseverlaufsinformationen auch dann von einem Fahrzeug begonnen, wenn das Fahrzeug feststellt, dass sich kein weiteres vorrausfahrendes Fahrzeug innerhalb der Reichweite der Fahrzeug-Fahrzeug-Kommunikationsmittel befindet. Hierbei wird bevorzugt eine Meldung, welche über den Abbruch der Übertragungskette informiert mit versendet.

In der Informationskette können auch bekannte Reisezeiten für Abschnitte der weiteren Strecke oder für verschiedene alternative Strecken weitergegeben werden, die z.B. nach dem erfindungsgemäßen Verfahren ermittelt wurden. Dies ist in der Figur durch den punktierten Pfeil rechts in der Figur dargestellt.

## Patentansprüche

1. Verfahren zum Bestimmen einer Reisezeit für eine Reisestrecke für ein in einer Abfolge von Fahrzeugen reisendes Nachfolgefahrzeug mit den Schritten,
- Erfassen von Reiseverlaufsdaten durch mindestens ein in der Abfolge vorausreisendes Fahrzeug, wobei die Reiseverlaufsdaten mindestens eine Fahrzeit oder Daten, aus denen diese ermittelbar ist, für eine Teilstrecke zwischen zwei Positionen auf der Reisestrecke umfassen,
- Übertragung von Reiseverlaufsinformationen, welche die Reiseverlaufsdaten umfassen, mittels Fahrzeug-Fahrzeug-Kommunikation von mindestens einem versendenden vorausreisenden Fahrzeug an mindestens ein empfangendes Nachfolgefahrzeug,
**dadurch gekennzeichnet,**
**dass** die Reisezeit für eine die Teilstrecke umfassende Strecke aus den Reiseverlaufsdaten berechnet wird, wobei ein in der Abfolge vorausreisendes Fahrzeug die Reisezeit zwischen seiner aktuellen Position und einer voraus liegenden Position auf der Reisestrecke bestimmt und als Teil der Reiseverlaufsinformationen versendet.

2. Verfahren nach Anspruch 1
**dadurch gekennzeichnet, dass** es sich bei den Positionen um die aktuelle Fahrzeugposition des Nachfolgefahrzeugs und eine Position auf der bevorstehenden Reiseroute des Nachfolgefahrzeugs handelt.

3. Verfahren nach mindestens einem der Ansprüche 1 bis 2
**dadurch gekennzeichnet, dass** die Positionen, an denen die Fahrzeiten erfasst werden, feste Distanzen haben.

4. Verfahren nach mindestens einem der Ansprüche 1 bis 3 **dadurch gekennzeichnet, dass** das Übertragen der Reiseverlaufsdaten durch Übertragen von Parametern von die Reiseverlaufsdaten darstellenden Funktionen erfolgt.

5. Verfahren nach mindestens einem der Ansprüche 1 bis 4
**dadurch gekennzeichnet, dass** mehrere in der Abfolge reisende Fahrzeuge Reiseverlaufsinformationen von vorausreisenden Fahrzeugen empfangen und Reiseverlaufsinformationen versenden, wobei die Fahrzeuge eine Kommunikationskette derart bilden, dass zumindest Teile der von den Fahrzeugen jeweils empfangenen Reiseverlaufsinformationen und/oder daraus ermittelte Gesamtfahrzeiten von den empfangenden Fahrzeugen weiter an in der Abfolge nachfolgende Fahrzeuge versendet werden.

6. Verfahren nach mindestens einem der Ansprüche 1 bis 5
**dadurch gekennzeichnet, dass** die Reiseverlaufsinformationen, welche an nachfolgende Fahrzeuge übermittelt werden, auf einen bestimmten Radius um die versendenden oder empfangenden Fahrzeuge beschränkt sind.

7. Verfahren nach Anspruch 6
**dadurch gekennzeichnet, dass** der Radius durch eine zeitliche Erreichbarkeit bestimmt wird.

8. Verfahren nach mindestens einem der Ansprüche 1 bis 7
**dadurch gekennzeichnet, dass** die durch die Fahrzeuge versendeten Reiseverlaufsinformationen mindestens eine Abschnittsgesamtreisezeit für mindestens einen durch jeweils zwei Reiseabschnittsgrenzen bestimmten Reiseabschnitt beinhalten.

9. Verfahren nach mindestens einem der Ansprüche 1 bis 8
**dadurch gekennzeichnet, dass** das Versenden der Reiseverlaufsinformationen durch die Fahrzeuge durch das Erreichen von vorgegebenen Reiseabschnittsgrenzen und/oder durch den Empfang von Reiseverlaufsinformationen vorausfahrender Fahrzeuge angestoßen wird.

10. Verfahren nach mindestens einem der Ansprüche 1 bis 8
**dadurch gekennzeichnet, dass** das Versenden der Reiseverlaufsinformationen durch die Fahrzeuge durch den Empfang einer Reiseinformationsanfrage angestoßen wird.

11. Verfahren nach Anspruch 10
**dadurch gekennzeichnet, dass** die Reiseinformationsanfrage von einem Fahrzeug an mindestens ein in der Abfolge vorausreisendes Fahrzeug versendet wird und die in der Abfolge vorausreisenden Fahrzeuge die Reiseinformationsanfrage so lange an weitere vorausreisende Fahrzeuge weiter übermitteln, bis die Reiseinformationsanfrage an ein vorderstes vorausreisendes Fahrzeug, welches ein in der Reiseinformationsanfrage angegebenes Reiseziel oder eine nächste Reiseabschnittsgrenze bereits erreicht hat, übermittelt wurde.

12. Verfahren nach Anspruch 11
**dadurch gekennzeichnet, dass** die Reiseinformationsanfrage eine aktuelle Fahrzeugposition des jeweils die Reiseinformationsanfrage versendenden Fahrzeugs beinhaltet und die an mindestens ein nachfolgendes Fahrzeug übermittelten Reiseverlaufsinformationen eine Gesamtfahrzeit zwischen der aktuellen Fahrzeugposition und dem Reiseziel oder der Reiseabschnittsgrenze umfassen, wobei die Gesamtfahrzeit durch Aufsummieren von, ausgehend vom vordersten vorausreisenden Fahrzeug, an die an der Weiterleitung der Reiseinformationsanfrage beteiligten Fahrzeuge zurückgesendeten Fahrzeiten berechnet wird.

13. Verfahrens nach mindestens einem der Ansprüche 1 bis 12
**dadurch gekennzeichnet, dass** Reisezeiten für mindestens zwei alternative Reisestrecken ermittelt werden, wobei eine optimale Reisestrecke durch Auswahl der alternativen Reisestrecke, für welche die geringste Reisezeit bestimmt wurde ermittelt wird.

## Claims

1. Method for determining the travel time for a stage of a journey, for a vehicle travelling in a sequence of vehicles, said method comprising the steps:
- collection of travel data by at least one vehicle which is travelling further ahead in the sequence, the said travel data comprising at least a driving time, or data from which this can be determined, relating to a partial stage between two positions along the journey stage,
- transmission of travel information that includes the said travel data, by means of vehicle-to-vehicle communication, from at least one vehicle further ahead in the sequence to at least one receiving vehicle that is following it,
**characterised in that**
the travel time for a stage comprising the said partial stage is calculated from the travel data, a vehicle further ahead in the sequence determining the travel time between its current position and a position further along the journey stage and transmitting this as part of the travel information.

2. Method according to Claim 1,
**characterised in that** the said positions are the current position of the following vehicle and a position along the travel route ahead of the following vehicle.

3. Method according to at least one of Claim 1 and 2,
**characterised in that** the positions at which the travel times are noted, are flxed distances apart.

4. Method according to at least one of Claims 1 to 3,
**characterised in that** the travel data are transmitted by transmitting parameters of functions that represent the travel data.

5. Method according to at least one of Claims 1 to 4,
**characterised in that** several vehicles travelling in the sequence receive travel information from vehicles travelling ahead of them and transmitting this travel information, so that the vehicles form a communication chain in such manner that at least part of the travel information and/or overall driving times determined therefrom and received by each vehicle are transmitted on by the latter to other vehicles following further behind in the sequence.

6. Method according to at least one of Claims 1 to 5,
**characterised in that** the travel information communicated to following vehicles is restricted to a given radius around the transmitting or receiving vehicles.

7. Method according to Claim 6,
**characterised in that** the radius is determined by attainability in a specified time.

8. Method according to at least one of Claims 1 to 7,
**characterised in that** the travel information transmitted by vehicles contains at least one overall travel time for at least one section of the journey determined in each case by two journey section limits.

9. Method according to at least one of Claims I to 8,
**characterised in that** the transmission of travel information by vehicles is triggered by reaching predetermined journey section limits and/or by the reception of travel information from vehicles further ahead.

10. Method according to at least one of Claims 1 to 8,
**characterised in that** the transmission of travel information by vehicles is triggered by reception of a request for travel information.

11. Method according to Claim 10,
**characterised in that** the travel information request is transmitted from a vehicle to at least one vehicle ahead of it in the sequence, and the said vehicles ahead send on the travel information request to other vehicles even further ahead until the request has been transmitted to a vehicle furthest ahead which has already reached a journey destination or next journey section limit specified in the travel information request.

12. Method according to Claim 11,
**characterised in that** the travel information request contains a current vehicle position of the vehicle that has transmitted the travel information request, and the travel information transmitted to at least one following vehicle includes an overall driving time between the current vehicle position and the journey destination or journey section limit, this overall driving time being calculated as the sum of driving times transmitted back starting from the foremost vehicle and proceeding through all the vehicles that have participated in passing on the travel information request.

13. Method according to at least one of Claims 1 to 12,
**characterised in that** travel times are determined for at least two alternative journey stages, and an optimum journey route is determined by selecting the alternative journey stage for which the shortest travel time has been determined.

## Revendications

1. Procédé de détermination d'un temps de trajet pour un voyage, pour un véhicule suiveur voyageant dans une suite de véhicules, avec les étapes,
- détection de données concernant l'allure du voyage par au moins un véhicule éclaireur dans le convoi, les données concernant l'allure du voyage comprenant au moins un temps de conduite ou des données à partir desquelles ce dernier peut être recherché, pour un trajet partiel entre deux positions sur le trajet du voyage,
- transmission d'informations concernant l'allure du voyage, comprenant les données concernant l'allure du voyage, par communication de véhicule à véhicule, d'au moins un véhicule éclaireur émetteur vers au moins un véhicule suiveur récepteur,
**caractérisé en ce que**
le temps de trajet pour un trajet comprenant le trajet partiel est calculé à partir des données concernant l'allure du voyage, un véhicule éclaireur dans le convoi déterminant le temps de trajet entre sa position actuelle et une position antérieure sur le trajet du voyage et l'envoyant en tant que partie des informations concernant l'allure du voyage.

2. Procédé selon la revendication 1, **caractérisé en ce que** les positions sont la position actuelle du véhicule suiveur et une position imminente sur la route du véhicule suiveur.

3. Procédé selon au moins l'une des revendications 1 à 2, **caractérisé en ce que** les positions dans lesquelles les temps de trajet sont détectés ont des distances fixes.

4. Procédé selon au moins l'une des revendications 1 à 3, **caractérisé en ce que** la transmission des données concernant l'allure du voyage est assurée par transmission de paramètres de fonctions représentant les données concernant l'allure du voyage.

5. Procédé selon au moins l'une des revendications 1 à 4, **caractérisé en ce que** plusieurs véhicules voyageant dans le convoi réceptionnent des informations concernant l'allure du voyage de la part de véhicules éclaireurs et émettent des informations concernant l'allure du voyage, les véhicules formant une chaîne de communication de façon à ce qu'au moins des parties des informations concernant l'allure du voyage respectivement réceptionnées par les véhicules et/ou concernant des temps de trajets totaux recherchés à partir de ces dernières soient renvoyées par les véhicules récepteurs à des véhicules suiveurs dans le convoi.

6. Procédé selon au moins l'une des revendications 1 à 5, **caractérisé en ce que** les informations concernant l'allure du voyage qui sont transmises à des véhicules suiveurs sont limitées à un certain rayon autour des véhicules émetteurs ou récepteurs.

7. Procédé selon la revendication 6, **caractérisé en ce que** le rayon est déterminé par un champ d'accessibilité dans le temps.

8. Procédé selon au moins l'une des revendications 1 à 7, **caractérisé en ce que** les informations concernant l'allure du voyage envoyées par les véhicules contiennent au moins un temps de trajet total pour un tronçon, pour au moins un tronçon du voyage déterminé par respectivement deux limites de tronçons du voyage.

9. Procédé selon au moins l'une des revendications 1 à 8, **caractérisé en ce que** l'envoi des informations concernant l'allure du voyage par les véhicules est déclenché par l'atteinte de limites prédéfinies de tronçons du voyage et/ou par la réception d'informations concernant l'allure du voyage à partir de véhicules éclaireurs.

10. Procédé selon au moins l'une des revendications 1 à 8, **caractérisé en ce que** l'envoi des informations concernant l'allure du voyage par les véhicules est déclenché par la réception d'une demande d'informations concernant le voyage.

11. Procédé selon la revendication 10, **caractérisé en ce que** la demande d'informations concernant le voyage est envoyée par un véhicule à au moins l'un des véhicules éclaireurs dans le convoi et **en ce que** les véhicules éclaireurs dans le convoi transmettent la demande d'informations concernant le voyage à d'autres véhicules éclaireurs, jusqu'à ce que la demande de renseignements concernant le voyage ait été transmise à un véhicule éclaireur ayant déjà atteint une destination du voyage indiquée dans la demande d'informations concernant le voyage ou une prochaine limite d'un tronçon de voyage.

12. Procédé selon la revendication 11, **caractérisé en ce que** la demande d'informations concernant le voyage contient une position actuelle du véhicule qui envoie la demande d'informations concernant le voyage et **en ce que** les informations concernant l'allure du voyage transmises à au moins un véhicule suiveur comprennent un temps de trajet total entre la position actuelle du véhicule et la destination du voyage ou la limite du tronçon de voyage, le temps de trajet total étant calculé par totalisation de temps de trajet renvoyés par le premier véhicule éclaireur aux véhicules participant à la retransmission de la demande d'informations concernant le voyage.

13. Procédé selon au moins l'une des revendications 1 à 12, **caractérisé en ce que** des temps de trajets sont recherchés pour au moins deux trajets alternatifs pour le voyage, un trajet optimal étant recherché par sélection du trajet alternatif pour le voyage pour lequel on a déterminé le temps de trajet le plus court.
